# NEW EUROPEAN PATENT SPECIFICATION

(11) **EP 0 465 179 B2**
(45) Date of publication and mention of the opposition decision: **02.01.2002**
(45) Mention of the grant of the patent: 04.10.1995
(21) Application number: 91305919.2
(22) Date of filing: 28.06.1991
(51) Int. Cl.: H04N 1/32

(54) **Electronic copying/printing machines**
Elektronische Kopie-/Druck-Geräte
Appareils de copie/d'impression électroniques

(30) Priority: 29.06.1990 US 546606
(43) Date of publication of application: 08.01.1992
(73) Proprietor: XEROX CORPORATION, Rochester, New York 14644 (US)
(72) Inventor: Gauronski, John F., Rochester, New York, 14625 (US); Hengst, Acco, Lewisville, Texas 75067 (US); Rowold, Alane H., Rochester, New York, 14607 (US)
(74) Representative: Grünecker, Kinkeldey, Stockmair & Schwanhäusser Anwaltssozietät

(56) References cited:
- EP-A- 0 022 957
- EP-A- 0 055 369
- EP-A- 0 262 603
- EP-A- 0 366 425
- GB-A- 1 531 401
- JP-A- 6 045 834
- US-A- 4 099 860
- US-A- 4 829 468
- IBM TECHNICAL DISCLOSURE BULLETIN vol. 30, no. 8, January 1988, ARMONK (US) pages 135-136; "multi-task management algorithm for a printer"
- IBM TECHNICAL DISCLOSURE BULLETIN vol. 25, no. 3B, August 1982, ARMONK (US)pages 1380 - 1384; W.B. ELLIOTT ET AL: 'printer performance improvement'
- Sun Unix Manual pp. 235-240, 617-620

## Description

This invention relates to electronic copying/printing systems, and more particularly, to a job interrupt process for enabling jobs to be temporarily interrupted in order for a special job to be processed ahead of jobs in progress.

Electronic printing systems typically employ a scanner for scanning image-bearing documents and converting the image to image signals (or 'pixels') for use in making prints. The job stream usually consists of a quantity of jobs being scanned and printed consecutively without disturbance in the job stream flow. In some cases however, a special job must be processed before a job already in the job stream, necessitating an interruption of the scan or print process. For example, an operator may require the early completion of a small special job when the system may be processing a job that may take hours to complete. In this and the multiple other situations in which the processing of consecutive jobs must be disturbed, it would be highly desirable if a system or procedure allowed these special cases to be handled expeditiously and efficiently.

US-A-4,673,990 discloses a printer having control means to stop a print operation temporarily, with printing continuing until paper that has been fed is processed, at which time printing is stopped, ready for restart at the point interrupted. US-A-4,511,928 discloses a printing system and method with print while-store capability allowing printing to take place while image data are still being gathered. US-A-4,825,296 discloses copy apparatus providing three memories that allow images to be held while the images are displayed prior to printing to determine if image quality is satisfactory. US-A-4,563,706 discloses an image forming system wherein multiple inputs, outputs, and memories allow processing of multiple images simultaneously.

US-A-4,099,860 discloses a copier/duplicator priority interrupt apparatus in which a first lower priority production run comprising a predetermined number of multiple copies of documents can be interrupted to allow a second higher priority production run to be completed. When the interrupt apparatus is activated, the remaining number of copies of the first production run is stored in a memory together with other machine status information. After the second production run has been completed, the priority interrupt apparatus causes the copier/duplicator to complete the remaining copies of the first production run.

In accordance with the present invention, there is provided a method of processing jobs input in the form of documents to provide prints with a scanner for scanning the documents and converting the documents to image data, and a printer for printing prints using image files corresponding to the image data, comprising the steps of: (a) temporarily interrupting scanning of the job currently being scanned to commence scanning of a special job; (b) while performing step (a), continuing printing of the interrupted job; (c) when scanning of the special job is completed, or at least sufficient has been scanned to enable printing of the special job to be started, interrupting printing of the job then in process, and starting printing of the special job; (d) resuming scanning of the interrupted job when scanning of the special job is completed; (e) resuming printing of the interrupted job when printing of the special job is completed; and (f) where a special job is in process, inhibiting interruption of the special job by a second special job.

The present invention will now be described by way of example with reference to the accompanying drawings, in which:
Figure 1 is a view depicting an electronic printing system incorporating the ;job interrupt' system of the present invention;
Figure 2 is a block diagram depicting the major elements of the printing system shown in Figure 1;
Figure 3 is a plan view illustrating the principal mechanical components of the printing system shown in Figure 1;
Figure 4 is a schematic view showing certain construction details of the document scanner for the printing system shown in Figure 1;
Figures 5A, 5B, and 5C comprise a schematic block diagram showing the major parts of the control section for the printing system shown in Figure 1;
Figure 6 is a block diagram of the operating system, together with printed wiring boards and shared line connections for the printing system shown in Figure 1;
Figure 7 is a view depicting an exemplary job programming ticket and job scorecard displayed on the user interface (UI) touchscreen of the printing system shown in Figure 1;
Figure 8 is a view depicting the job file and print queue;
Figure 9 is a view of the user interface touchscreen display depicting a queue of typical job files for jobs in the system;
Figure 10 is a view of the user interface touchscreen display depicting a print queue of typical jobs to be printed;
Figure 11 is a view depicting the print queue before and after insertion of an interrupt job in the queue, illustrating the manner in which the job currently being printed is interrupted, and
Figure 12 is a view of the user interface touchscreen display illustrating the manner in which a specific job in the job file is accessed to become an 'interrupt' job.

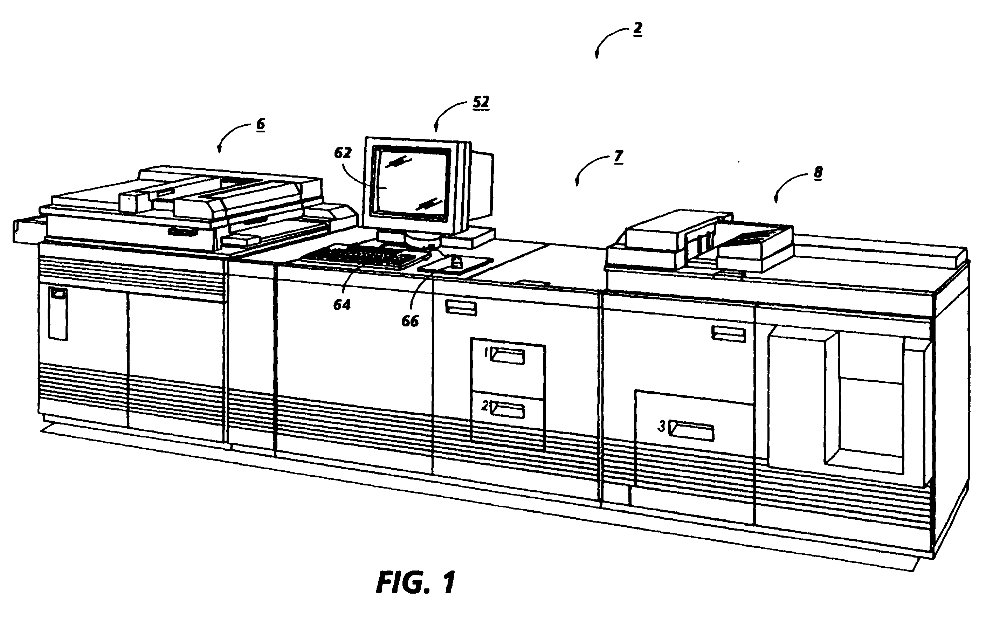

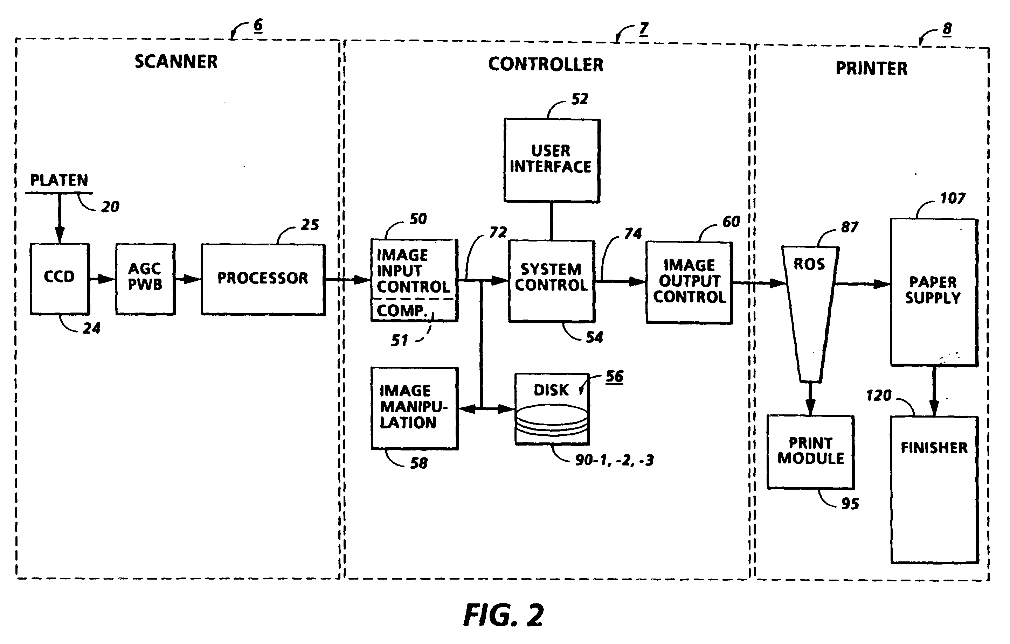

Referring to Figures 1 and 2, there is shown an exemplary laser-based printing system 2 for processing print jobs. Printing system 2 for purposes of explanation is divided into a scanner section 6, controller section 7, and printer section 8. While a specific printing system is shown and described, the present invention may be used with other types of printing systems such as ink jet, ionographic, etc.

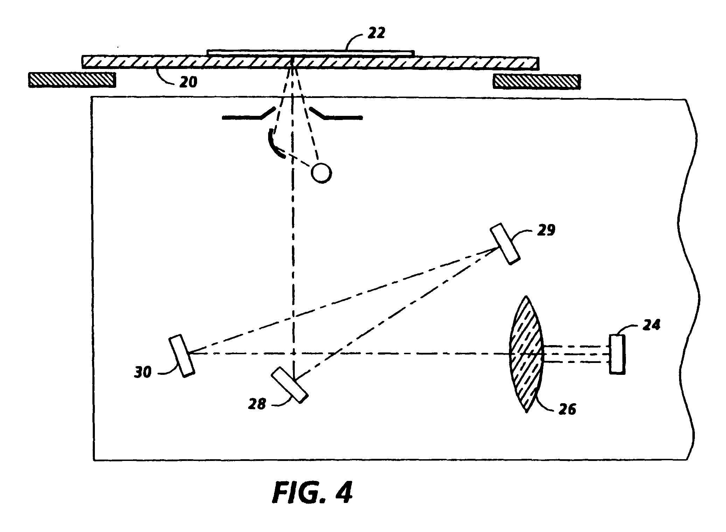

Referring particularly to Figures 2-4, scanner section 6 incorporates a transparent platen 20 on which the document 22 to be scanned is located. One or more linear arrays 24 are supported for reciprocating scanning movement below platen 20. Lens 27 and mirrors 28, 29, 30 cooperate to focus array 24 on a line-like segment of platen 20 and the document being scanned thereon. Array 24 provides image signals (or 'pixels') representative of the image scanned which, after suitable processing by processor 25, are output to controller section 7.

Processor 25 converts the analog image signals output by array 24 to digital, and processes the image signals as required to enable system 2 to store and handle the image data in the form required to carry out the job programmed. Processor 25 also provides enhancements and changes to the image signals, such as filtering, thresholding, screening, cropping, reduction/enlarging, etc. Following any changes and adjustments in the job program, the document must be rescanned.

Documents 22 to be scanned may be located on platen 20 for scanning by automatic document handler (ADF) 35 operable in either a recirculating document handling (RDH) mode or a semi-automatic document handling (SADH) mode. A manual mode, including a book mode and a computer forms feeder (CFF) mode, is also provided, the latter to accommodate documents in the form of computer fanfold. For RDH mode operation, document handler 35 has a document tray 37 in which documents 22 are arranged in stacks or batches. The documents 22 in tray 37 are advanced by suction feed belt 40 and document feed rolls 41 and document feed belt 42 onto platen 20 where the document is scanned by array 24. Following scanning, the document is removed from platen 20 by belt 42 and returned to tray 37 by document feed rolls 44.

For operation in the SADH mode, a document entry slot 46 provides access to the document feed belt 42 between tray 37 and platen 20 through which individual documents may be inserted manually for transport to platen 20. Feed rolls 49 behind slot 46 form a nip for engaging and feeding the document to feed belt 42 and onto platen 20. Following scanning, the document is removed from platen 20 and discharged into catch tray 48.

For operation in the CFF mode, computer forms material is fed through slot 46 and advanced by feed rolls 49 to document feed belt 42, which in turn advances a page of the fanfold material into position on platen 20.

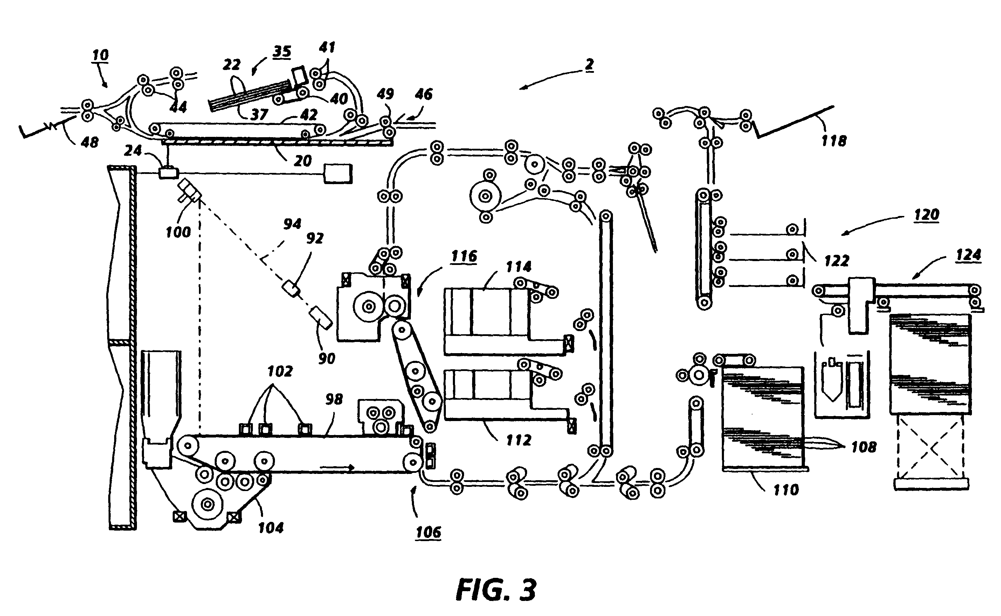

Referring to Figures 2 and 3, printer section 8 comprises a laser type printer and for purposes of explanation is separated into a raster output scanner (ROS) section 87, print module section 95, paper supply section 107, and finisher 120. ROS 95 has a laser 91, the beam of which is split into two imaging beams 94. Each beam 94 is modulated in accordance with the content of an image signal input by acousto-optic modulator 92 to provide dual imaging beams 94. Beams 94 are scanned across a moving photoreceptor 98 of print module 95 by the mirrored facets of a rotating polygon 100 to expose two image lines on photoreceptor 98 with each scan and create the latent electrostatic images represented by the image signal input to modulator 92. Photoreceptor 98 is uniformly charged by corotrons 102 at a charging station preparatory to exposure by imaging beams 94. The latent electrostatic images are developed by developer 104 and transferred at transfer station 106 to a print medium 108 delivered by paper supply section 107. Medium 108 may comprise any of a variety of sheet sizes, types, and colors. For transfer, the print medium is brought forward in timed registration with the developed image on photoreceptor 98 from either a main paper tray 110 or from auxiliary paper trays 112 or 114. The developed image transferred to the print medium 108 is permanently fixed or fused by fuser 116 and the resulting prints discharged to either output tray 118, or finisher 120. Finisher 120 includes a stitcher 122 for stitching orstapling the prints together to form books, and a thermal binder 124 for adhesively binding the prints into books.

Referring to Figures 1,2 and 5, controller section 7 is, for explanation purposes, divided into an image input controller 50, user interface (UI) 52, system controller 54, main memory 56, image manipulation section 58, and image output controller 60.

The scanned image data input from processor 25 of scanner section 6 to controller section 7 are compressed by image compressor/ processor 51 of image input controller 50 on PWB 70-3. As the image data pass through compressor/processor 51, they are segmented into slices N scanlines wide, each slice having a slice pointer. The compressed image data, together with slice pointers and any related image descriptors providing image specific information (such as height and width of the document in pixels, the compression method used, pointers to the compressed image data, and pointers to the image slice pointers), are placed in an image file. The image files, which represent different print jobs, are temporarily stored in system memory 61 which comprises a random access memory (RAM) pending transfer to main memory 56 where the data are held pending use.

As best seen in Figure 1, UI 52 includes a combined operator controller/CRT display consisting of an interactive touchscreen 62, keyboard 64, and mouse 66. UI 52 interfaces the operator with printing system 2, enabling the operator to program print jobs and other instructions, to obtain system operating information, instructions, programming information, diagnostic information, etc. Items displayed on touchscreen 62, such as files and icons, are actuated by either touching the displayed item on screen 62 with a finger or by using mouse 66 to point cursor 67 to the item selected and keying the mouse.

Main memory 56 has plural hard disks 90-1, 90-2, 90-3 for storing machine operating system software, machine operating data, and the scanned image data currently being processed.

When the compressed image data in main memory 56 require further processing, or are required for display on touchscreen 62 of UI 52, or are required by printer section 8, they are accessed. Where further processing, other than that provided by processor 25, is required, the data are transferred to image manipulation section 58 on PWB 70-6 where the additional processing steps such as collation, make ready, decomposition, etc are carried out. Following processing, the data may be returned to main memory 56, sent to UI 52 for display on touchscreen 62, or sent to image output controller 60.

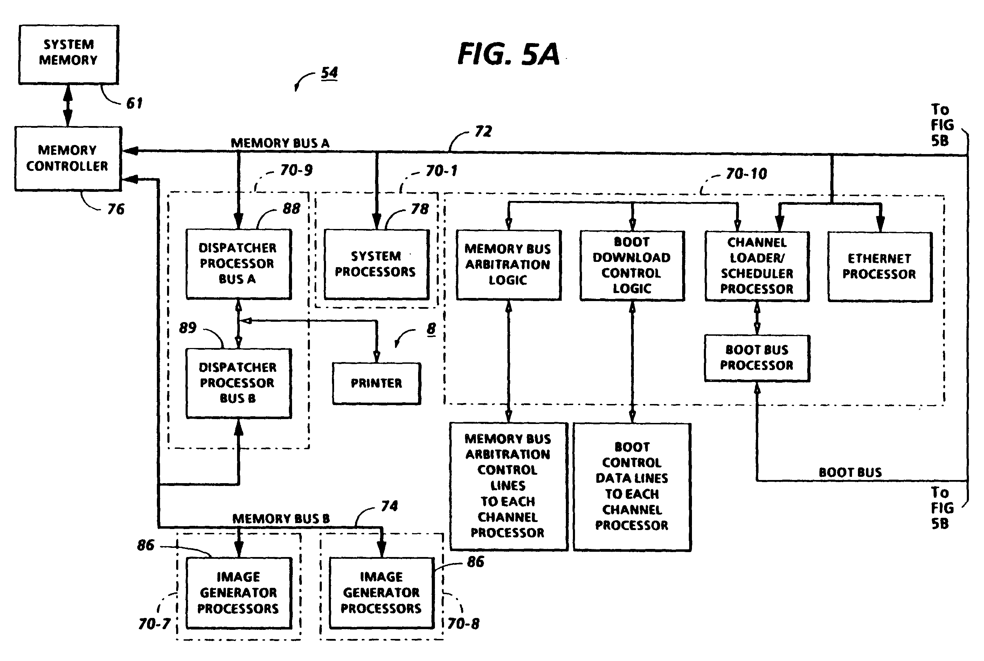

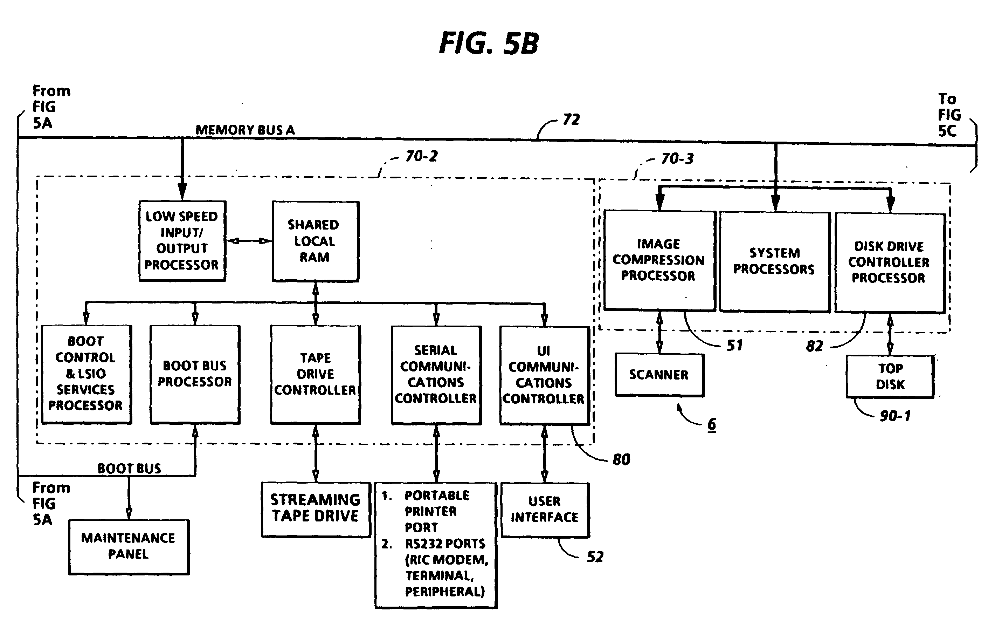

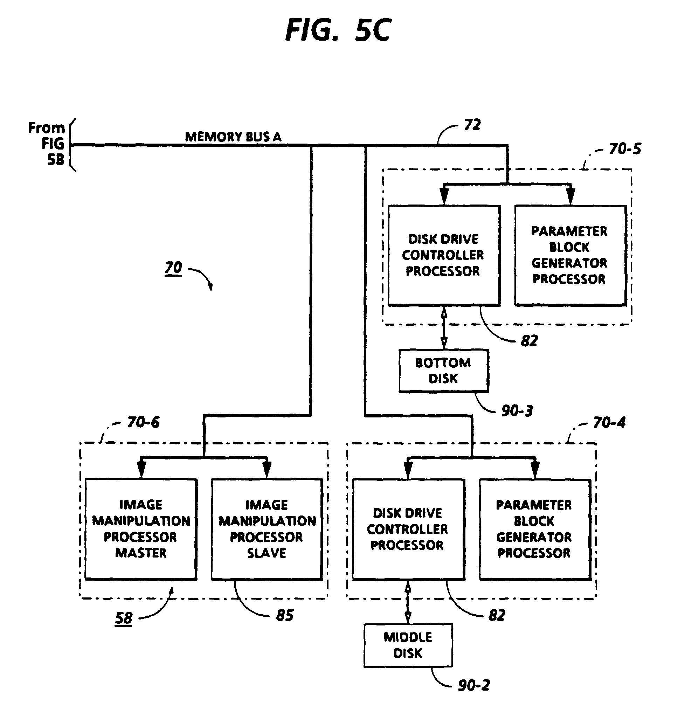

Image data output to image output controller 60 are decompressed and readied for printing by image-generating processors 86 of PWBs 70-7, 70-8 (seen in Figure 5A). Following this, the data are output by dispatch processors 88, 89 on PWB 70-9 to printer section 8. Image data sent to printer section 8 for printing are normally purged from memory 56 to make room for new image data.

Referring particularly to Figures 5A-5C, control section 7 includes a plurality of printed wiring boards (PWBs) 70, PWBs 70 being coupled with one another and with system memory 61 by a pair of memory buses 72, 74. Memory controller 76 couples system memory 61 with buses 72, 74. PWBs 70 indude system processor PWB 70-1 having plural system processors 78; low speed I/O processor PWB 70-2 having UI communication controller 80 for transmitting data to and from UI 52; PWBs 70-3, 70-4, 70-5 having disk drive controller/processors 82 for transmitting data to and from disks 90-1, 90-2, 90-3 respectively of main memory 56 (image compressor/processor 51 for compressing the image data is on PWB 70-3); image manipulation PWB 70-6 with image manipulation processors of image manipulation section 58; image generation processor PWBs 70-7, 70-8 with image generation processors 86 for processing the image data for printing by printer section 8; dispatch processor PWB 70-9 having dispatch processors 88, 89 for controlling transmission of data to and from printer section 8; and boot control-arbitration-scheduler PWB 70-10.

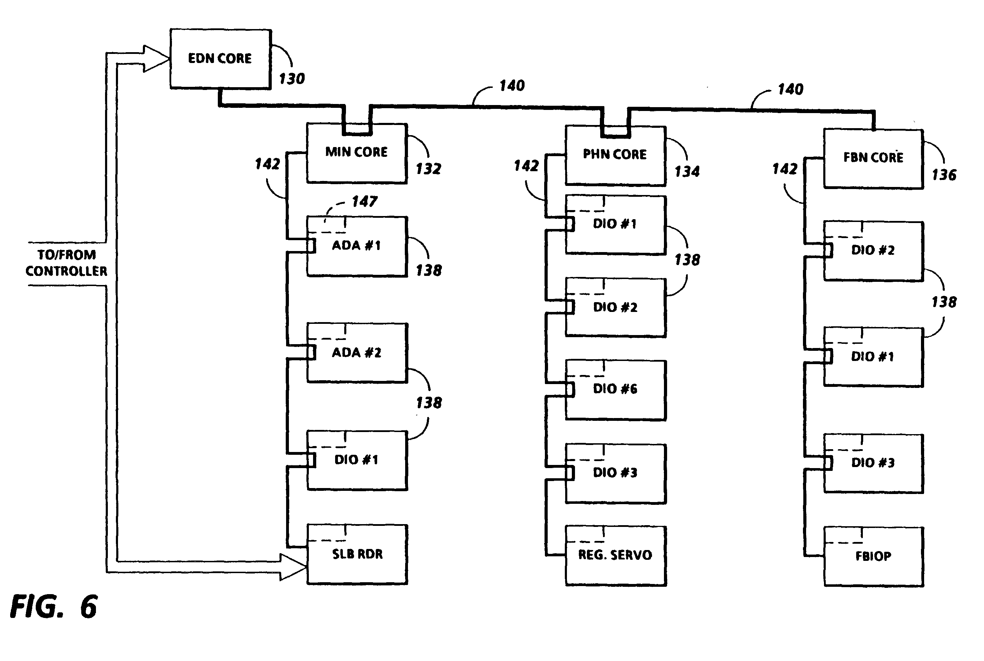

Referring particularly to Figure 6, system control signals are distributed via a plurality of printed wiring boards (PWBs). These include EDN core PWB 130, marking imaging core PWB 132, paper handling core PWB 134, and finisher binder core PWB 136, together with various input/output (I/O) PWBs 138. A system bus 140 couples the core PWBs 130, 132, 134, 136 with each other and with controller section 7, while local buses 142 serve to couple the I/O PWBs 138 with each other and with their associated core PWB.

On machine power up, the operating system software is loaded from memory 56 to EDN core PWB 130 and from there to the remaining core PWBs 132, 134, 136 via bus 140, each core PWB 130, 132, 134, 136 having a boot ROM 147 for controlling downloading of operating system software to the PWB, fault detection, etc. Boot ROMs 147 also enable transmission of operating system software and control data to and from PWBs 130, 132, 134, 136 via bus 140, and control data to and from I/O PWBs 138 via local buses 142. Additional ROM, RAM, and NVM memory types are resident at various locations within system 2.

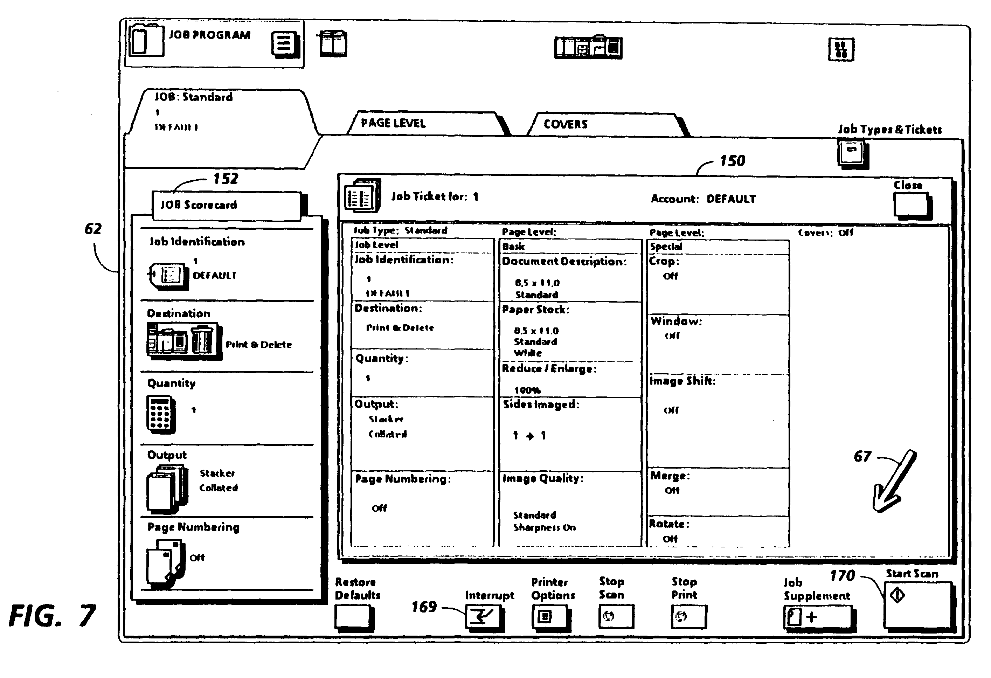

Referring to Figure 7, jobs are programmed in a job program mode in which there are displayed on touchscreen 62 a job ticket 150 and a job scorecard 152 for the job being programmed. Job ticket 150 displays various job selections programmed, while job scorecard 152 displays the basic instructions to the system for printing the job.

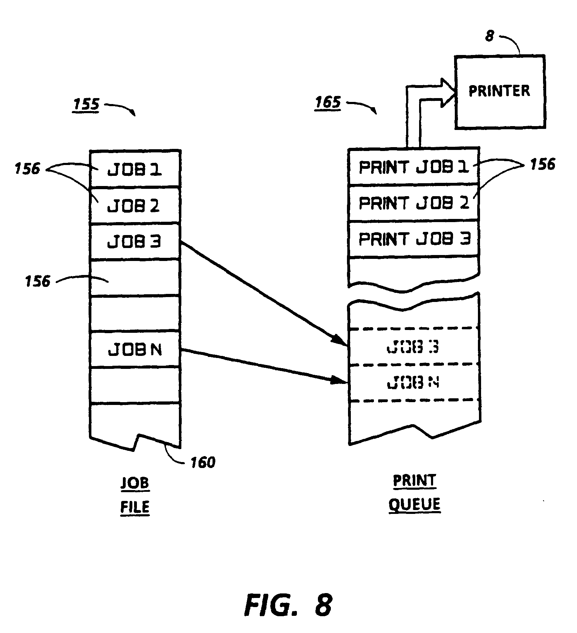

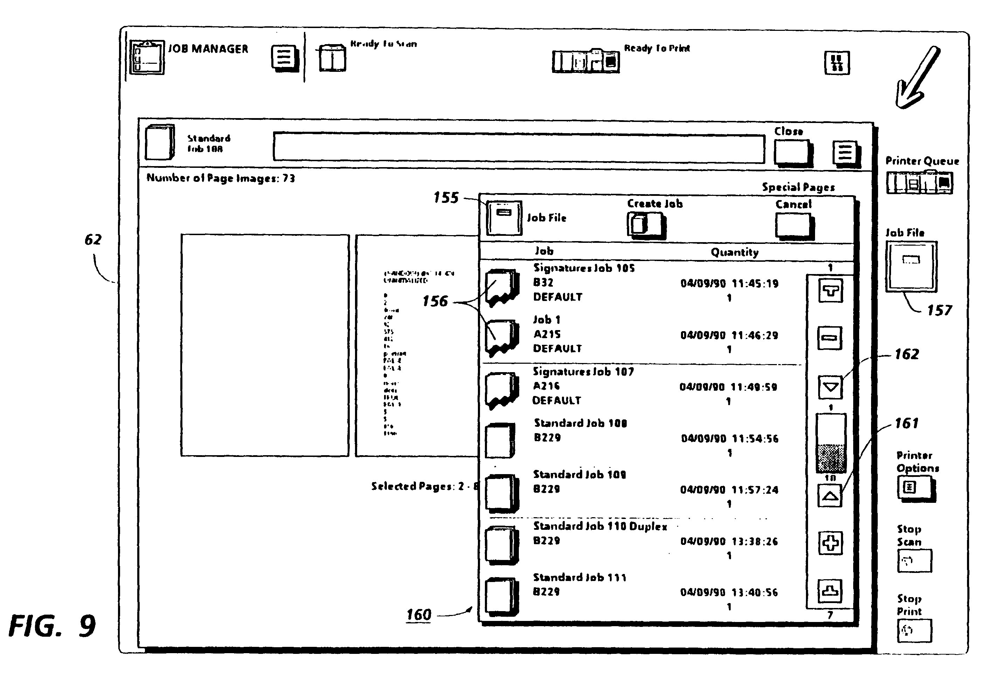

Referring to Figures 8 and 9, the image files are arranged in a job file 155, with the print jobs 156 numbered consecutively in the order in which the print jobs are scanned in. Where the operator wishes to see the jobs currently residing in job file 155, as for example, to select jobs to be moved to the print queue for printing, a SYSTEM FILE icon 157 on touchscreen 62 is actuated. This displays an image queue 160 of the jobs 156 currently in the job file on screen 62, an example of which is shown in Figure 9. Each job is identified by a descriptor showing the type of job, job number, number of prints, etc. By using up and down scrolling icons 161, 162, the operator can scroll the list of jobs where the number of jobs in the job file is too large to be simultaneously displayed on touchscreen 62.

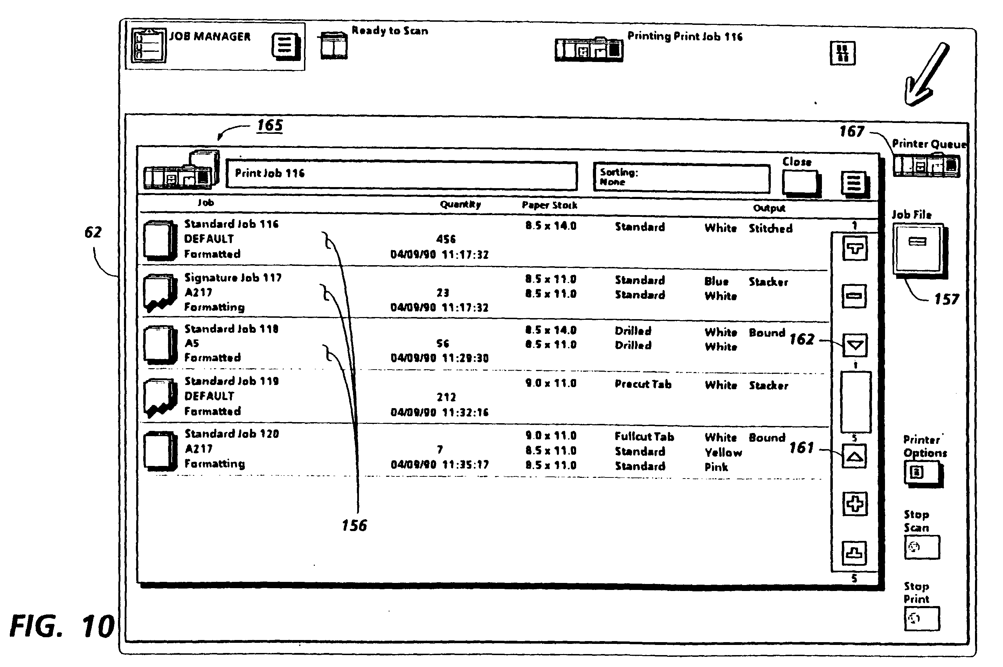

Referring also to Figure 10, to print a job 156, the job is moved into a print queue 165. A PRINTER QUEUE icon 167 on touchscreen 62, when actuated, displays the current print queue with a list of the jobs in the queue on touchscreen 62, an example of which is shown in Figure 10. Each job in print queue 165 has a job descriptor identifying the job, job number, quantity to be printed, paper color, finishing type, etc. Print queue 165 is ordered by priority and time of arrival of the job in the print queue. Other priority orderings may be envisaged.

Where it is desired to process a job 156 before printing as, for example, to edit a job, the image queue 160 is displayed (if not already displayed on screen 62) and the particular job identified. The parts of the image file required for the processing selected are accessed, the image data de-compressed and converted to the resolution required for display on screen 62. When processing is completed, the image data are compressed and returned to main memory 56.

A job 156 in print queue 165 may be removed from the queue at any time before printing has started, and returned to the job file 155. In that case, the image file removed loses its position in the print queue.

For printing a job, the image file having compressed image data, image slice pointers, and descriptors of the job is read from disks 90-1, 90-2, 90-3 of main memory 56 into system memory 61. The image data are formatted and processed in blocks called bands. Band descriptors, which provide descriptions of the objects within a page, base addresses for all of the scanlines in the band, the start addresses for each band, and the starting position for each page, are created.

Using the image descriptors, band descriptors, and image slice pointers, packets of information, referred to as 'image parameter blocks', containing all the information needed for the image-generation processors 86 (seen in Figure 5A) to retrieve the image data for processing and printing, are created. Processors 86 include a decoder, depredictor, and image-generating logic to decompress the image data and provide the binary image data used by printer section 8 to make prints.

Following printing, the image file for the job is normally purged from memory 56 to make room for new jobs.

Where the operator desires to stop the job currently being scanned or printed in order to print a higher-priority job (referred to as an 'n interrupt or 'special job' hereinafter), the interrupt function is selected. This function allows the operator to process a interrupt job without having to wait for the job currently being processed to finish. At the same time, the interrupted job is saved and automatically resumed on completion of the interrupt job or jobs.

Referring to Figure 7, the touch screen must be placed in a job program mode when the interrupt job is not in the job file and hence requires scanning. The interrupt job is programmed in the same manner as any other job, i.e., jobs not of priority status previously processed by the printing system. Ajob identification number is assigned, the quantity to be printed selected, the output options selected, etc. The operator then selects the INTERRUPT icon 169 signalling to the system that the job is an 'interrupt job'. If the job program calls for saving the interrupt job, the interrupt job loses its priority status following printing, and is sent to the job file for storage with the same priority as other jobs.

Where scanner section 6 is currently scanning in another job, scanning is interrupted in response to programming an interrupt job at the first logical point. This allows scanning of the interrupt job to commence as promptly as possible. Normally, scanning is stopped when scanning of the page in process is complete, except in the case where scanner section 6 is operating in the RDH mode. In that case, scanning of all the documents in the ADH is completed prior to commencing scanning of the interrupt job. Once scanning has stopped, scanning the interrupt job may begin by selecting the appropriate scanning mode and activating the START SCAN icon 170. Printing of jobs in the print queue continues until scanning of the interrupt job is complete or at least sufficient to enable printing of the interrupt job to commence.

Where the interrupt job has a relatively large number of pages, scanning is normally done by operating ADH 35 in the RDH mode. For operation in this mode, the documents 22 that comprise the interrupt job are loaded into document tray 37, ADH 35 actuated, and the documents scanned by array 24. Where the interrupt job is only a limited number of pages, or consists of documents of odd sizes, the SADH mode may be used with the documents inserted one by one manually through slot 46 for scanning. Alternatively, the manual mode may be used. Where the documents comprise a book, book mode scanning is used or, in the case of fanfold documents, CFF mode is used. Once the interrupt job has completed scanning, scanning the previously-interrupted job is resumed by deselecting interrupt 169 and then selecting the start-scan icon 170.

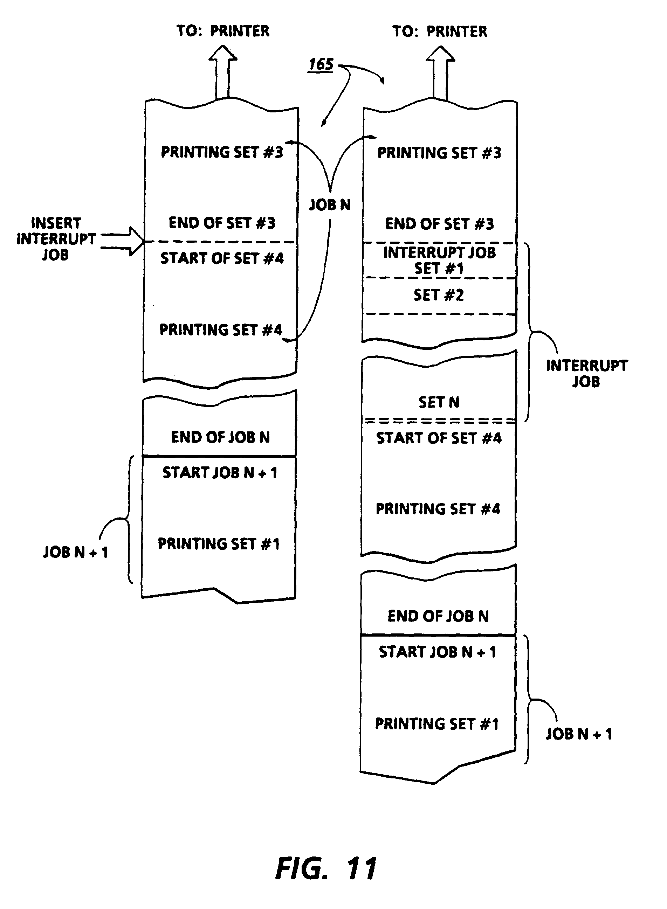

Referring to Figure 11, when scanning of the interrupt job is sufficient to allow printing to commence, the job file, or so much of the job file as is completed for the interrupt job, is inserted into the print queue and into the job file of the job currently being printed at the first logical point. This places the interrupt job in position to be printed not only ahead of the other jobs in the print queue but also ahead of the remainder of the interrupted job. On detection of the job file for the interrupt job, printer section 8 stops the job currently being printed at the earliest logical point and starts printing the interrupt job. For example, where the interrupted job is programmed for sets (i.e., 1-n, 1-n, 1-n, etc.), stopping occurs at the end of the set in process. Where the job is uncollated (i.e., n copies of page 1, n copies of page 2, etc.), stopping occurs when the last print of the page being printed is made.

For printing, the image data pages for the interrupt job are accessed in main memory 56, decompressed, and converted to binary image data for printing. Concurrently, image parameter blocks are generated with printing instructions for the specific interrupt job as described previously.

Where the parameters of the interrupt job require a function that the printer is currently unable to perform (i.e., a different type of paper than is currently loaded in the paper trays), the system assumes a NOT READY state and printing is inhibited. A message is displayed on touchscreen 62 informing the operator of the problem. The system will remain in the NOT READY state until either the deficiency is corrected or the interrupt job request cancelled.

On completion of printing of the interrupt job, or in the event that the request for an interrupt job is cancelled, the system reverts to the job previously being printed, resuming printing of that job at the point where it was stopped. Where changes in the system made to accommodate the interrupt job result in an inability of the system to continue with the stopped job, the system assumes a NOT READY state, and further printing is prevented until the problem is rectified.

In cases where the job currently being printed is itself an interrupt job, the interrupt job will be placed in print queue 165 immediately after the previously programmed interrupt job. Similarly, where several interrupt jobs are in print queue 165, each new interrupt job is placed in the queue after the last interrupt job entered.

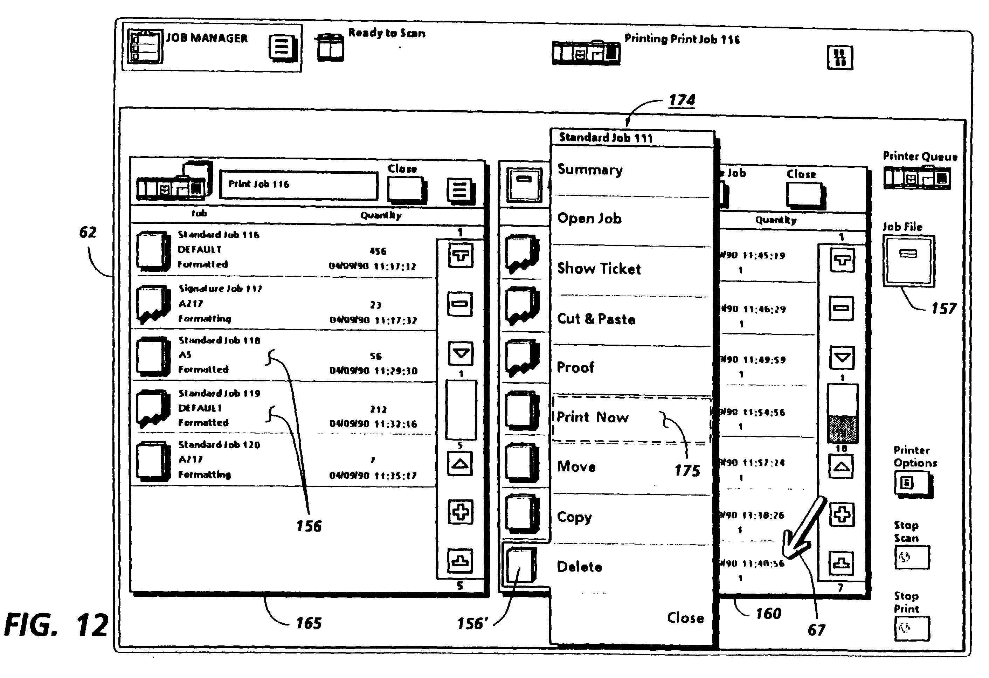

Referring to Figure 12, where it is desired to make a job already in job file 155 an interrupt job, the image queue 160 is displayed on touchscreen 62 in the manner described earlier above. The job to be made into an interrupt job is highlighted. This causes a selection file 174 with that job number to be displayed on touchscreen 62. Included in the selections contained in file 174 is a PRINT NOW icon 175. Actuating the PRINT NOW icon 175 moves the interrupt job from the image queue 160 into the print queue 165 as a interrupt job. It is understood that the interrupt job can be a previous job stored in its entirety, or a new job made up from selected pages of another job or jobs.

The job currently being printed (except in the case of another interrupt job) is stopped at a logical point. As described heretofore, the interrupt job is inserted in print queue 165 ahead of the remainder of the stopped job and before the other jobs in the print queue (except in the case where the job in process and the jobs waiting in the print queue are themselves interrupt jobs). Following printing of the last set required for the interrupt job, the stopped job is resumed.

## Claims

1. A method of processing jobs input in the form of documents to provide prints with a scanner for scanning the documents and converting the documents to image data, and a printer for printing prints using image files corresponding to the image data, comprising the steps of:
(a) temporarily interrupting scanning of the job currently being scanned to commence scanning of a special job;
(b) while performing step (a), continuing printing of the interrupted job;
(c) when scanning of the special job is completed, or at least sufficient has been scanned to enable printing of the special job to be started, interrupting printing of the job then in process, and starting printing of the special job;
(d) resuming scanning of the interrupted job when scanning of the special job is completed;
(e) resuming printing of the interrupted job when printing of the special job is completed; and
(f) where a special job is in process, inhibiting interruption of the special job by a second special job.

2. The method according to claim 1, including the steps of:
(a) cycling down the printer in response to interrupting the job currently being printed, and
(b) inhibiting restarting of the printer where the current operating mode of the printer is incompatible with the instructions for printing the special job.

3. The method according the claim 1, including the steps of:
(a) cycling down the printer in response to completion of printing of the special job, and
(b) inhibiting restarting of the printer where the current operating mode of the printer is incompatible with the printing instructions for the interrupted job.

4. The method according to any one of claims 1 to 3, including the step of:
where the interrupted job is being printed in sets, inserting the special job in the job succession at the end of the set currently being printed.

5. The method according to any one of claims 1 to 3, including the step of:
where the interrupted job is being printed in blocks of N pages each, inserting the special job in the job succession at the end of the last page in the block of N pages being printed.

6. The method according to any of claims 1 to 5, including the step of:
arranging multiple special jobs in a first-in-first-out order in the queue ahead of the other jobs in the queue.

7. The method according to claim 6, including the step of:
restricting the order in which the special jobs are arranged in the queue to the order in which the special jobs are put into the queue.

## Patentansprüche

1. Verfahren zum Verarbeiten von Aufträgen, die in Form von Dokumenten eingegeben werden, um Ausdrucke herzustellen mit einem Scanner zum Abtasten der Dokumente und zum Umwandeln der Dokumente in Bilddaten, wobei das Verfahren folgende Schritte aufweist:
(a) zeitweiliges Unterbrechen einer Abtastung des Auftrags, der momentan abgetastet wird, um eine Abtastung eines speziellen Auftrags zu beginnen;
(b) während der Durchführung des Schritts (a) Fortführen eines Drucks des unterbrochenen Auftrags;
(c) wenn eine Abtastung des speziellen Auftrags abgeschlossen ist, oder zumindest ausreichend davon abgetastet worden ist, um zu ermöglichen, dass ein Druck des speziellen Auftrags gestartet wird, Unterbrechen des Drucks des Auftrags, der dann in Bearbeitung ist, und Starten des Drucks des speziellen Auftrags;
(d) Wiederaufnahme einer Abtastung des unterbrochenen Auftrags, wenn eine Abtastung des speziellen Auftrags abgeschlossen ist;
(e) Wiederaufnahme eines Drucks des unterbrochenen Auftrags, wenn ein Druck des speziellen Auftrags abgeschlossen ist; und
(f) wenn ein spezieller Auftrag in Bearbeitung ist, Verhindern, dass der spezielle Auftrag durch einen zweiten speziellen Job unterbrochen wird.

2. Verfahren nach Anspruch 1, das die folgenden Schritte umfasst:
(a) Herunterfahren des Druckers in Abhängigkeit einer Unterbrechung des Auftrags, der momentan gedruckt wird, und
(b) Verhindern eines erneuten Startens des Druckers dort, wo der momentane Betriebsmodus des Druckers mit den Anweisungen zum Drucken des speziellen Auftrags nicht kompatibel ist.

3. Verfahren nach Anspruch 1, das folgende Schritte umfasst:
(a) Herunterfahren des Druckers in Abhängigkeit eines Abschlusses eines Druckens des speziellen Auftrags, und
(b) Verhindern eines erneuten Startens des Druckers dort, wo der momentane Betriebsmodus des Druckers mit den Anweisungen für den unterbrochenen Auftrag nicht kompatibel ist.

4. Verfahren nach einem der Ansprüche 1 bis 3 mit folgenden Schritten:
dort, wo der unterbrochene Auftrag in Sätzen gedruckt wird, Einsetzen des Auftrags-Files für den speziellen Auftrag in der Auftrags-File-Abfolge an dem Ende des Satzes, der momentan gedruckt wird.

5. Verfahren nach einem der Ansprüche 1 bis 3, das folgenden Schritt umfasst:
dort, wo der unterbrochene Auftrag in Blöcken mit N-Seiten jeweils gedruckt wird, Einsetzen des Auftrags-Files für den speziellen Auftrag in die Auftrags-File-Abfolge an dem Ende der letzten Seite in dem Block aus N-Seiten, die gedruckt werden.

6. Verfahren nach einem der Ansprüche 1 bis 5, das folgenden Schritt umfasst:
Anordnen vieler spezieller Aufträge in einer Reihenfolge auf der Basis zuerst eingegangen, zuerst ausgegeben, vor den anderen Auftrags-Files in der Warteschlange.

7. Verfahren nach Anspruch 6, das den folgenden Schritt umfasst:
Beschränkung der Reihenfolge, in denen die speziellen Aufträge angeordnet werden, in der Warteschlange auf die Reihenfolge, in denen die speziellen Aufträge in die Warteschlange eingesetzt werden.

## Revendications

1. . Procédé de traitement de tâches fournies sous la forme de documents pour produire des tirages du moyen d'un lecteur optique pour lire les documents et convertir les documents en signaux d'image, et d'une imprimante pour imprimer des tirages en utilisant des fichiers d'image correspondant aux données d'image, comprenant les étapes qui consistent :
(a) à interrompre momentanément la lecture effectuée par la tâche en cours de lecture pour commencer la lecture demandée par une tâche spéciale ;
(b) pendant que l'étape (a) est effectuée, poursuivre l'impression de la tâche interrompue ;
(c) lorsque la lecture de la tâche spéciale est achevée ou a été effectuée à un point suffisant pour permettre l'impression de la tâche spéciale, à interrompre l'impression de la tâche en cours de traitement, puis à commencer d'imprimer la tâche spéciale ;
(d) à reprendre la lecture de la tâche interrompue lorsque la lecture de la tâche spéciale est achevée, et
(e) à reprendre l'impression de la tâche interrompue lorsque l'impression de la tâche spéciale s'est achevée, et
(f) lorsque la tâche spéciale est en cours de traitement, à interdire l'interruption de la tâche spéciale par une seconde tâche spéciale.

2. Procédé selon la revendication 1, comprenant les étapes qui consistent :
(a) à désactiver l'imprimante en réponse à l'interruption de la tâche en cours d'impression, et
(b) à inhiber le redémarrage de l'imprimante lorsque le mode de fonctionnement en cours de l'imprimante est incompatible avec les instructions permettant l'impression de la tâche spéciale.

3. Procédé selon la revendication 1, comportant les étapes qui consistent :
(a) à désactiver l'imprimante en réponse à l'achèvement de l'impression de la tâche spéciale, et
(b) à inhiber le redémarrage de l'imprimante lorsque le mode de fonctionnement en cours de l'imprimante est incompatible avec les instructions d'impression destinées à la tâche interrompue.

4. Procédé selon l'une quelconque des revendications 1 à 3, comportant l'étape qui consiste :
lorsque la tâche interrompue est en cours d'impression par liasses, à insérer le fichier de tâches pour la tâche spéciale dans la séquence de fichiers de tâches à la fin de la liasse en cours d'impression.

5. Procédé selon l'une quelconque des revendications 1 à 3, comprenant l'étape qui consiste :
lorsque la tâche interrompue est imprimée par blocs de N pages chacun, insérer le fichier de tâche pour la tâche spéciale dans la séquence de fichier de tâches à la fin de la dernière page du bloc de N pages en cours d'impression.

6. Procédé selon l'une quelconque des revendications 1 à 5, comportant l'étape qui consiste :
à disposer des tâches spéciales multiples dans un ordre premier entré premier sorti dans la file d'attente avant les autres fichiers de tâches se trouvant dans la file d'attente.

7. Procédé selon la revendication 8, comportant l'étape qui consiste :
à limiter l'ordre dans lequel les tâches spéciales sont agencées dans la file d'attente, à l'ordre dans lequel les tâches spéciales sont introduites dans la file d'attente.
